# EUROPÄISCHE PATENTANMELDUNG

(11) **EP 4 280 321 A2**
(43) Veröffentlichungstag der Anmeldung: **22.11.2023**
(21) Anmeldenummer: 23169659.2
(22) Anmeldetag: 25.04.2023
(51) Int. Cl.: H01M 8/04119, H01M 8/04291

(54) **BRENNSTOFFZELLEN-ABGASANLAGE**

(30) Priorität: 20.05.2022 DE 102022112683
(71) Anmelder: Purem GmbH, 66539 Neunkirchen (DE)
(72) Erfinder: Hammer, Jochen, Stuttgart (DE); Birgler, Markus, Wernau (DE); Brichzin, Volker, Ludwigsburg (DE); Wink, Peter, Göppingen (DE); Schaller, Patrick, Bopfingen (DE); Wacker, Andreas, Plochingen (DE)
(74) Vertreter: Ruttensperger Lachnit Trossin Gomoll

(57) **Zusammenfassung**

Eine Brennstoffzellen-Abgasanlage für ein Brennstoffzellensystem, insbesondere in einem Fahrzeug, umfasst eine von Brennstoffzellen-Abgas durchströmbare Brennstoffzellen-Abgasleitung (14) und eine von dem Brennstoffzellen-Abgas durchströmbare Abscheideeinheit (16), wobei die Abscheideeinheit (16) einen von dem Brennstoffzellen-Abgas in einer Abgas-Hauptströmungsrichtung durchströmbaren, stromaufwärtigen Leitungsabschnitt (38) der Brennstoffzellen-Abgasleitung (14), einen in einem Öffnungsbereich (44) an den stromaufwärtigen Leitungsabschnitt (38) anschließenden stromabwärtigen Leitungsabschnitt (42) der Brennstoffzellen-Abgasleitung (14), eine erste Flüssigkeitsabgabeöffnung (50) in dem Öffnungsbereich (44) zur Abgabe von Flüssigkeit aus dem die Brennstoffzellen-Abgasleitung(14) durchströmenden Brennstoffzellen-Abgas sowie eine Drallstrom-Erzeugungseinheit (54) in dem stromaufwärtigen Leitungsabschnitt (38) umfasst.

## Beschreibung

Die vorliegende Erfindung betrifft eine Brennstoffzellen-Abgasanlage, über welche das aus einer Brennstoffzelle abgegebene Prozessgas als Brennstoffzellen-Abgas zur Umgebung abgegeben werden kann.

Um insbesondere bei elektromotorisch betriebenen Fahrzeugen die Energie zum Betreiben der Fahr-Elektromotoren und auch der sonstigen Verbraucher elektrischer Energie in derartigen Fahrzeugen bereitstellen zu können, ist es bekannt, Brennstoffzellen einzusetzen. Im Betrieb einer derartigen Brennstoffzelle wird einem Anodenbereich Wasserstoff bzw. ein stark mit Wasserstoff angereichertes Anodengas zugeführt. Einem Kathodenbereich wird Sauerstoff bzw. sauerstoffhaltige Luft als Kathodengas zugeführt. Unter Umsetzung von Wasserstoff und Sauerstoff zu Wasser wird elektrischer Strom erzeugt. Das wasserstoffentreicherte Anodenabgas und das mit Wasser angereicherte Kathodenabgas verlassen die Brennstoffzelle als Brennstoffzellen-Abgas bzw. Prozessgas. Im Brennstoffzellenbetrieb wird zumindest das Kathodenabgas zur Umgebung abgegeben. In verschiedenen Betriebsphasen, wie zum Beispiel beim Spülen insbesondere des Anodenbereichs vor Beginn des Brennstoffzellenbetriebs, kann auch das Anodenabgas bzw. das in einer derartigen Betriebsphase durch den Anodenbereich geleitete Gas zur Umgebung abgegeben werden.

Es ist die Aufgabe der vorliegenden Erfindung, eine Brennstoffzellen-Abgasanlage für ein Brennstoffzellensystem, insbesondere in einem Fahrzeug, vorzusehen, mit welcher in dem Brennstoffzellen-Abgas mitgeführte Flüssigkeit, insbesondere Wasser, aus dem Brennstoffzellen-Abgas extrahiert werden können.

Erfindungsgemäß wird diese Aufgabe gelöst durch eine Brennstoffzellen-Abgasanlage für ein Brennstoffzellensystem, insbesondere in einem Fahrzeug, umfassend eine von Brennstoffzellen-Abgas durchströmbare Brennstoffzellen-Abgasleitung und eine von dem Brennstoffzellen-Abgas durchströmbare Abscheideeinheit, wobei die Abscheideeinheit umfasst:
- einen von dem Brennstoffzellen-Abgas in einer Abgas-Hauptströmungsrichtung durchströmbaren, stromaufwärtigen Leitungsabschnitt der Brennstoffzellen-Abgasleitung,
- einen in einem Öffnungsbereich an den stromaufwärtigen Leitungsabschnitt anschließenden stromabwärtigen Leitungsabschnitt der Brennstoffzellen-Abgasleitung,
- eine erste Flüssigkeitsabgabeöffnung in dem Öffnungsbereich zur Abgabe von Flüssigkeit aus dem die Brennstoffzellen-Abgasleitung durchströmenden Brennstoffzellen-Abgas,
- eine Drallstrom-Erzeugungseinheit in dem stromaufwärtigen Leitungsabschnitt.

Durch den Einsatz der Drallstrom-Erzeugungseinheit wird stromaufwärts der ringartigen ersten Flüssigkeitsabgabeöffnung eine Drallströmung des Brennstoffzellen-Abgases erzeugt. Die in einer derartigen Drallströmung wirkenden Zentrifugalkräfte führen dazu, dass im Brennstoffzellen-Abgas mitgeführte Flüssigkeit bzw. Flüssigkeitspartikel sich nach radial außen bewegen und somit im radial äußeren Bereich der Brennstoffzellen-Abgasströmung eine hohe Flüssigkeitskonzentration erzeugt wird. Die in dem radial äußeren Bereich der Brennstoffzellen-Abgasströmung sich verstärkt ansammelnde Flüssigkeit kann dann über die erste Flüssigkeitsabgabeöffnung abgeleitet werden.

Die Drallstrom-Erzeugungseinheit kann eine Mehrzahl von bezüglich einer Strömungsmittenachse im stromaufwärtigen Leitungsabschnitt in Umfangsrichtung aufeinanderfolgenden, bezüglich der Abgas-Hauptströmungsrichtung im stromaufwärtigen Leitungsabschnitt angestellten Strömungsablenkelementen umfassen. Derartige mit einer Mehrzahl von schaufelartig ausgebildeten Strömungsablenkelementen aufgebaute Drallstrom-Erzeugungseinheiten werden beispielsweise in Abgasanlagen von Diesel-Brennkraftmaschinen als Mischer eingesetzt, um eine Verwirbelung des Abgasstroms zu erzeugen und damit die Durchmischung von Abgas und in dieses eingespritztem Reduktionsmittel, im Allgemeinen eine Harnstoff/Wasser-Lösung, stromaufwärts einer SCR-Katalysatoreinheit zu unterstützen.

Für eine effiziente Strömungsablenkung zum Erzeugen der Drallströmung können die Strömungsablenkelemente sich von einem ringartigen Körper der Drallstrom-Erzeugungseinheit nach radial innen erstrecken oder/und können in Umfangsrichtung einander benachbarte die Strömungsablenkelemente sich in ihren radial inneren Bereichen in Umfangsrichtung überlappen.

Ein einfach und kostengünstig realisierbarer, gleichwohl stabiler und gegen Korrosion resistenter Aufbau kann erreicht werden, wenn die Drallstrom-Erzeugungseinheit mit dem ringartigen Körper und den Strömungsablenkelementen als vorzugsweise einstückiges Blechumformteil ausgebildet ist. Bei einer hinsichtlich der Korrosionsfestigkeit, der Herstellungskosten und der Gestaltungsfreiheit bei der Formgebung besonders vorteilhafter Ausgestaltung kann die Drallstrom-Erzeugungseinheit beispielsweise mit dem ringartigen Körper und den Strömungsablenkelementen vorzugsweise einstückig mit Kunststoffmaterial aufgebaut sein.

Um das Ableiten von im radial äußeren Bereich des Brennstoffzellen-Abgasstroms sich ansammelnder Flüssigkeit zuverlässig zu unterstützen, wird vorgeschlagen, dass im Öffnungsbereich ein stromaufwärtiger Endabschnitt des stromabwärtigen Leitungsabschnitts in einen stromabwärtigen Endabschnitt des stromaufwärtigen Leitungsabschnitts derart eingreifend positioniert ist, dass zwischen dem stromaufwärtigen Endabschnitt des stromabwärtigen Leitungsabschnitts und dem stromabwärtigen Endabschnitt des stromaufwärtigen Leitungsabschnitts die erste Flüssigkeitsabgabeöffnung gebildet ist.

Hierzu kann eine Ausgestaltung vorteilhaft sein, bei welcher der stromabwärtige Endabschnitt des stromaufwärtigen Leitungsabschnitts in der Abgas-Hauptströmungsrichtung sich vorzugsweise im Wesentlichen konisch erweiternd ausgebildet ist oder/und der stromaufwärtige Endabschnitt des stromabwärtigen Leitungsabschnitts sich in der Abgas-Hauptströmungsrichtung vorzugsweise im Wesentlichen konisch erweiternd ausgebildet ist.

Zum zuverlässigen Ableiten des radial äußeren Bereichs der Brennstoffzellen-Abgasströmung mit dem hohen Flüssigkeitsanteil kann weiter vorgesehen sein, dass der stromabwärtige Leitungsabschnitt an seinem stromaufwärtigen Ende eine kleinere Querschnittsabmessung aufweist, als der stromaufwärtige Leitungsabschnitt in seinem zwischen der Drallstrom-Erzeugungseinheit und seinem stromabwärtigen Ende liegenden Längenbereich. Weiter kann hierzu die erste Flüssigkeitsabgabeöffnung im Wesentlichen ringartig ausgebildet sein

Die Abscheideeinheit kann ein Abscheideeinheitgehäuse umfassen, wobei der Öffnungsbereich in dem Abscheideeinheitgehäuse angeordnet ist. Damit ist dafür gesorgt, dass insbesondere dort, wo auch die erste Flüssigkeitsabgabeöffnung gebildet ist, die Brennstoffzellen-Abgasanlage nach außen im Wesentlichen abgeschlossen ist und keine Fremdkörper in diese eintreten können.

Da nicht ausgeschlossen werden kann, dass trotz des Erzeugens einer Drallströmung auch stromabwärts der ersten Flüssigkeitsabgabeöffnung noch Flüssigkeit in dem Brennstoffzellen-Abgas enthalten ist, wird vorgeschlagen, dass der stromabwärtige Leitungsabschnitt stromabwärts des Öffnungsbereichs eine zweite Flüssigkeitsabgabeöffnung aufweist. Hierzu kann beispielsweise der stromabwärtige Leitungsabschnitt in dem Abscheideeinheitgehäuse einen Biegungsbereich mit einem in Vertikalrichtung unten zu positionierenden Biegungsscheitel umfassen, wobei die zweite Flüssigkeitsabgabeöffnung im Bereich des Biegungsscheitels angeordnet ist.

In einem in Vertikalrichtung unten zu positionierenden Bereich des Abscheideeinheitgehäuses kann ein Flüssigkeitssammelbereich mit wenigstens einer Flüssigkeitsableitöffnung zum Ableiten von Flüssigkeit aus dem Abscheideeinheitgehäuse vorgesehen sein.

Um auch bei vergleichsweise niedrigen Temperaturen die Abgabe von Flüssigkeit aus dem Abscheideeinheitgehäuse zu ermöglichen bzw. grundsätzlich das Einfrieren der im Flüssigkeitsammelbereich sich ansammelnden Flüssigkeit zu vermeiden, kann in Zuordnung zu dem Flüssigkeitsammelbereich eine Heizeinheit zum Erwärmen von im Flüssigkeitssammelbereich angesammelter Flüssigkeit vorgesehen sein.

Da beispielsweise beim Spülen des Anodenbereichs einer Brennstoffzelle auch die Möglichkeit besteht, dass wasserstoffhaltiges Prozessgas als Brennstoffzellen-Abgas über das Brennstoffzellen-Abgassystem zur Umgebung abgegeben wird, wird zum Vermeiden einer übermäßig starken Wasserstoffanreicherung im Abscheideeinheitgehäuse vorgeschlagen, dass in einem in Vertikalrichtung oben zu positionierenden Bereich des Abscheideeinheitgehäuses ein Wasserstoffsammelbereich mit wenigstens einer Wasserstoffableitöffnung zum Ableiten von Wasserstoff aus dem Abscheideeinheitgehäuse vorgesehen ist.

Da der vergleichsweise leichte Wasserstoff sich in Vertikalrichtung im Abscheideeinheitgehäuse im Allgemeinen oben ansammeln wird, ist es für eine zuverlässige Abgabe des Wasserstoffs nach außen vorteilhaft, wenn der Wasserstoffsammelbereich einen in Vertikalrichtung nach oben sich verjüngenden Wandungsbereich des Abscheideeinheitgehäuses umfasst, wobei die wenigstens eine Wasserstoffableitöffnung in einem oberen Scheitelbereich des Wandungsbereichs vorgesehen ist.

Im Betrieb einer Brennstoffzelle können beispielsweise durch die Prozessgase fördernde, im allgemeinen elektrisch betriebenen Luftverdichter, wie zum Beispiel Kompressoren, Geräusche entstehen, die in der Umgebung eines Fahrzeugs bzw. auch von den Fahrzeuginsassen als störend empfunden werden können. Es wird daher vorgeschlagen, dass vorzugsweise stromabwärts der Abscheideeinheit eine von Brennstoffzellen-Abgas durchströmbare Schalldämpfereinheit vorgesehen ist.

Die vorliegende Erfindung wird nachfolgend mit Bezug auf die beiliegenden Figuren detailliert beschrieben. Es zeigt:
- Fig. 1: eine Seitenansicht einer Brennstoffzellen-Abgasanlage;
- Fig. 2: die Brennstoffzellen-Abgasanlage der Fig. 1 mit geöffnet dargestellter Abscheideeinheit und Schalldämpfereinheit;
- Fig. 3: die in Fig. 1 dargestellte Schalldämpfereinheit vergrößert;
- Fig. 4: die in Fig. 2 dargestellte Abscheideeinheit vergrößert in perspektivischer Ansicht;
- Fig. 5: die in Fig. 2 dargestellte Abscheideeinheit vergrößert in Seitenansicht;
- Fig. 6: eine Detailansicht des Bereichs VI der Abscheideeinheit in Fig. 5
- Fig. 7: eine perspektivische Ansicht einer Drallstrom-Erzeugungseinheit;
- Fig. 8: die Drallstrom-Erzeugungseinheit der Fig. 7 in axialer Ansicht;
- Fig. 9: eine der Fig. 8 entsprechende Darstellung einer alternativen Ausgestaltung der Drallstrom-Erzeugungseinheit.

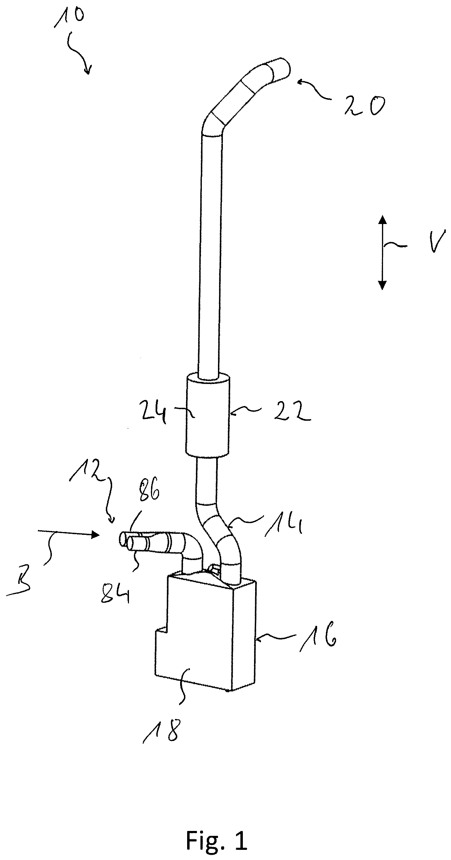

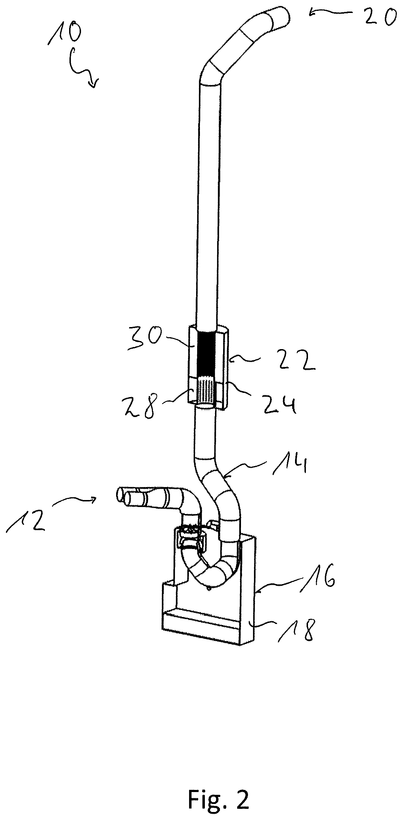

In den Fig. 1 und 2 ist eine Brennstoffzellen-Abgasanlage, welche insbesondere bei Nutzfahrzeugen bzw. Lastkraftwagen Anwendung finden kann, allgemein mit 10 bezeichnet. Die Brennstoffzellen-Abgasanlage 10 umfasst einen Eintrittsbereich 12, in welchem Brennstoffzellen-Abgas B in eine Brennstoffzellen-Abgasleitung 14 eintreten kann. Die Brennstoffzellen-Abgasanlage 10 umfasst, folgend auf den Eintrittsbereich 12, eine Abscheideeinheit 16 mit einem in Fig. 1 geschnitten bzw. offen dargestellten Abscheideeinheitgehäuse 18. Die Brennstoffzellen-Abgasleitung 14 durchsetzt das Abscheideeinheitgehäuse 18 und erstreckt sich bei in ein Fahrzeug eingebauter Brennstoffzellen-Abgasanlage 10 aus dem Abscheideeinheitgehäuse 18 in einer Vertikalrichtung V im Wesentlichen nach oben. In einem Austrittsbereich 20 verlässt das Brennstoffzellen-Abgas B die Brennstoffzellen-Abgasanlage 10.

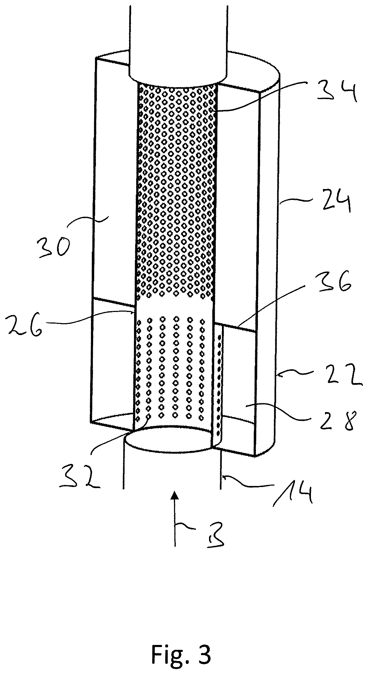

Im Strömungsbereich zwischen der Abscheideeinheit 16 und dem Austrittsbereich 20 befindet sich eine Schalldämpfereinheit 22, welche in Fig. 3 detaillierter dargestellt ist. Die Schalldämpfereinheit 22 umfasst ein rohrartiges Schalldämpfergehäuse 24, welches den im Bereich der Schalldämpfereinheit 22 liegenden Längenabschnitt 26 der Brennstoffzellen-Abgasleitung 14 umgibt. In dem Längenabschnitt 26 sind in Zuordnung zu zwei durch das Schalldämpfereinheitsgehäuse 24 umgrenzten Schalldämpferkammern 28, 30 jeweils Öffnungen 32, 34 vorgesehen, so dass eine Verbindung zwischen dem Innenvolumen der Brennstoffzellen-Abgasleitung 14 im Längenbereich 26 und den Schalldämpferkammern 28, 30 besteht. Die Schalldämpferkammern 28, 30 können durch eine Trennwand 36 voneinander getrennt sein. Es sei darauf hingewiesen, dass, wie in Fig. 3 dargestellt, in Zuordnung zu den beiden Schalldämpferkammern 28, 30 im Längenabschnitt 26 unterschiedliche Anzahlen oder/und unterschiedlich dimensionierte Öffnungen 32, 34 vorgesehen sein können. Auch kann eine oder können beide Schalldämpferkammern 28, 30 teilweise oder vollständig mit schalldämmendem Material, beispielsweise geschäumtem Material oder faserartigem Material, gefüllt sein. Es ist darauf hinzuweisen, dass die Schalldämpfereinheit 22 in Fig. 3 nur beispielhaft dargestellt ist und sehr verständlich auch in anderer Form konfiguriert sein könnte.

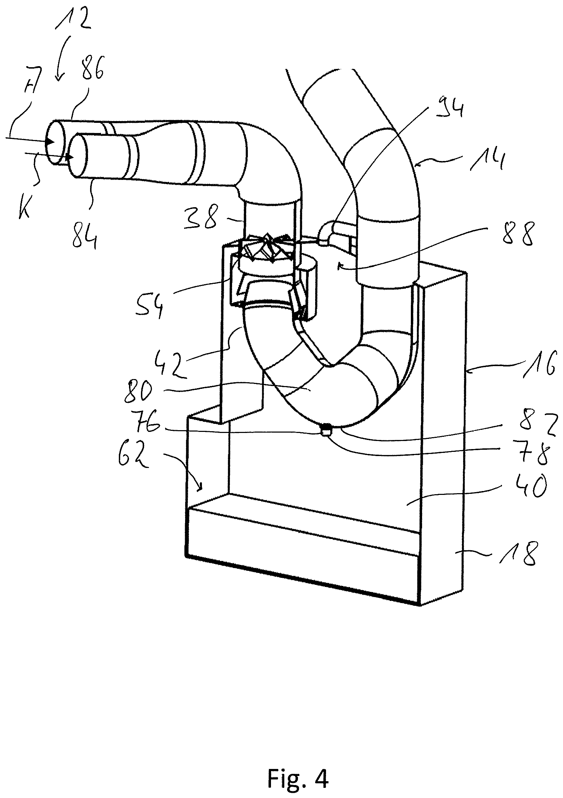

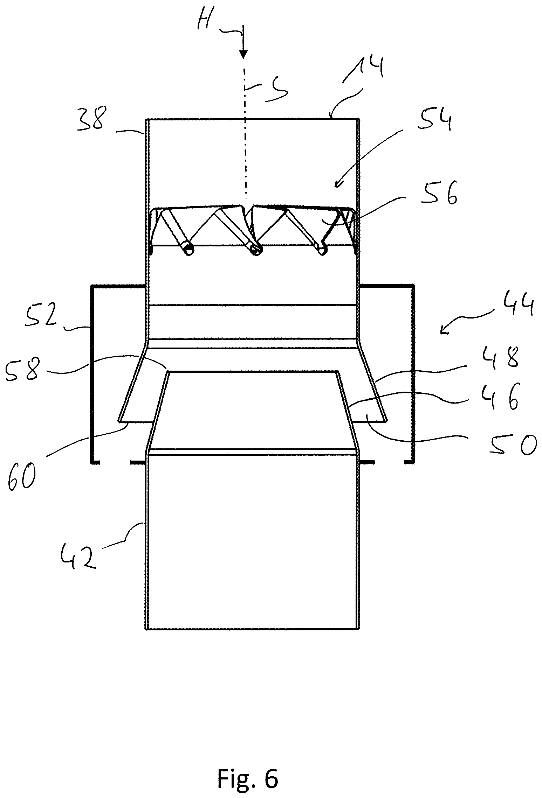

Mit Bezug auf die Fig. 4 bis 6 wird nachfolgend die Abscheideeinheit 16 detaillierter beschrieben.

Die Brennstoffzellen-Abgasleitung 14 führt mit einem rohrartigen, beispielsweise mit kreisrundem Querschnitt ausgebildeten und in Richtung einer Strömungsmittenachse S langgestreckten stromaufwärtigen Leitungsabschnitt 38 stromabwärts des Eintrittsbereichs 12 in das Abscheideeinheitgehäuse 18. In einem Innenraum 40 des Abscheideeinheitgehäuses 18 schließt an den stromaufwärtigen Leitungsabschnitt 38 ein stromabwärtiger Leitungsabschnitt 42 der Brennstoffzellen-Abgasleitung 14 an. In einem Öffnungsbereich 44 ist der stromabwärtige Leitungsabschnitt 42 mit einem stromaufwärtigen Endbereich 46 desselben in einen stromabwärtigen Endbereich 48 des stromaufwärtigen Leitungsabschnitts 38 eingreifend positioniert. Hierzu ist der stromabwärtige Endbereich 48 des stromaufwärtigen Leitungsabschnitts 38 entlang der Strömungsmittenachse S, welche im Wesentlichen auch der Mittenachse des geradlinig sich erstreckenden stromaufwärtigen Leitungsabschnitts 38 entsprechen kann, im Wesentlichen konisch sich erweiternd ausgebildet. Gleichermaßen ist der stromabwärtige Leitungsabschnitt 42 in seinem in den stromabwärtigen Endbereich 48 des stromaufwärtigen Leitungsabschnitts 38 sich erstreckenden stromaufwärtigen Endbereich 46 entlang der Strömungsmittenachse S und in Richtung einer Abas-Hauptströmungsrichtung H, in welcher das Brennstoffzellen-Abgas B den stromaufwärtigen Leitungsabschnitt 38 durchströmt, vorzugsweise im Wesentlichen konisch sich erweiternd ausgebildet.

Zwischen den zueinander im Wesentlichen komplementär sich radial erweiternden Endabschnitten 46, 48 ist eine ringartige erste Flüssigkeitsabgabeöffnung 50 gebildet, über welche die Brennstoffzellen-Abgasleitung 14 zum Innenraum 40 des Abscheideeinheitgehäuses 18 offen ist. Im Bereich der ersten Flüssigkeitsabgabeöffnung 50 bzw. in demjenigen Bereich, in welchem die beiden Leitungsabschnitte 38, 42 aneinander anschließen, kann die Brennstoffzellen-Abgasleitung 14 durch ein Gehäuseelement 52 überdeckt sein, welches in seinem in der Vertikalrichtung V unteren Bereich zum Innenraum 40 des Abscheideeinheitgehäuses 18 offen sein kann.

Stromaufwärts der ersten Flüssigkeitsabgabeöffnung 50 bzw. des radial sich erweiternden stromabwärtigen Endbereichs 48 des stromaufwärtigen Leitungsabschnitts 38 ist in diesem eine Drallstrom-Erzeugungseinheit 54 angeordnet. Die Drallstrom-Erzeugungseinheit 54 umfasst eine Mehrzahl von um die Strömungsmittenachse S in Umfangsrichtung aufeinander folgend angeordneten, schaufelartig ausgebildeten und sich im Wesentlichen radial erstreckenden Strömungsablenkelementen 56. Die Strömungsablenkelemente 56 sind bezüglich der Abgas-Hauptströmungsrichtung H angestellt, also nicht parallel und auch nicht unter einem Winkel von 90° dazu angewinkelt angeordnet, so dass das in der Abgas-Hauptströmungsrichtung H auf die Drallstrom-Erzeugungseinheit 54 zu strömende Brennstoffzellen-Abgas B beim Auftreffen auf die Strömungsablenkelemente 56 in Umfangsrichtung abgelenkt wird und dadurch eine Drallströmung erzeugt wird.

Es ist darauf hinzuweisen, dass derartige Drallstrom-Erzeugungseinheiten beispielsweise in Abgasanlagen von Diesel-Brennkraftmaschinen als Mischer eingesetzt werden. Das in einer derartigen Abgasanlage strömende Abgas einer Diesel-Brennkraftmaschine wird durch die so erzeugte Drallströmung verwirbelt, so dass eine effiziente Vermischung des Abgases mit in dieses eingespritztem Reduktionsmittel, beispielsweise einer Harnstoff/Wasser-Lösung, erzeugt wird und das so erzeugte Gemisch aus Abgas und Reduktionsmittel in eine SCR-Katalysatoreinheit eingeleitet wird.

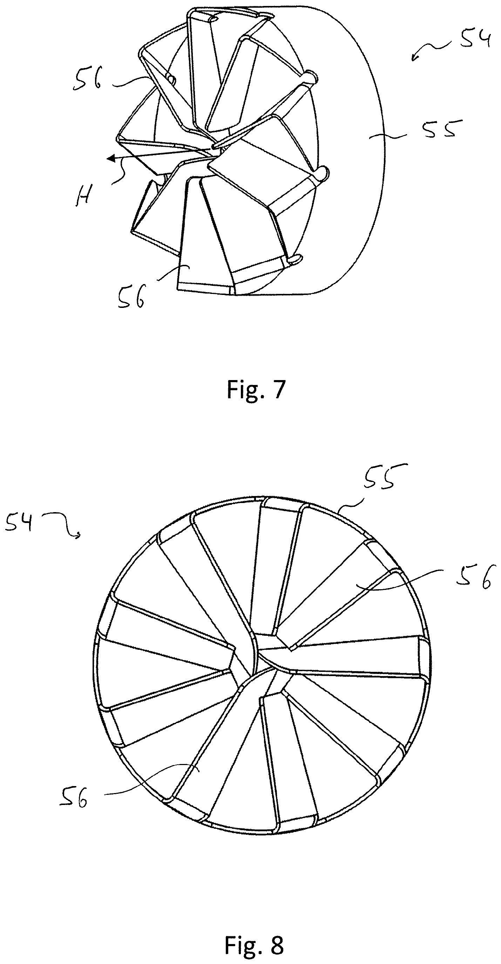

Die Fig. 7-9 zeigen detaillierter ein Ausgestaltungsbeispiel der bei der Brennstoffzellen-Abgasanlage 10 einsetzbaren Drallstrom-Erzeugungseinheit 54. Diese kann beispielsweise einstückig aus einem Blechmaterial gebogen sein und umfasst einen ringartigen bzw. im Wesentlichen zylindrischen Körper 55, mit welchem die Drallstrom-Erzeugungseinheit 68 beispielsweise an dem stromaufwärtigen Leitungsabschnitt 38 gehalten sein kann. Von dem Körper 55 erstrecken sich die schaufelartig ausgebildeten und in Umfangsrichtung aufeinanderfolgend angeordneten Strömungsablenkelemente 56 nach radial innen, so dass diese beispielsweise mit ihren radial inneren Endbereichen sich in Umfangsrichtung teilweise überlappen. Die Strömungsablenkelemente 56 sind bezüglich der Abgas-Hauptströmungsrichtung H angestellt, also unter einem von 90° unterschiedlichen Winkel geneigt, so dass das in der Abgas-Hauptströmungsrichtung H auf die Drallstrom-Erzeugungseinheit 54 zu strömende Brennstoffzellen-Abgas an den Strömungsablenkelementen 56 in Umfangsrichtung bezüglich der Strömungsmittenachse S abgelenkt wird und eine Drallströmung erzeugt wird.

Bei einer alternativen Ausgestaltungsart kann die Drallstrom-Erzeugungseinheit 54 mit Kunststoffmaterial aufgebaut sein. Dies führt zu einem leichten, kostengünstig herzustellenden Aufbau, bei welchem die Drallstrom-Erzeugungseinheit 54 eine hohe Korrosionsresistenz insbesondere bezüglich des Brennstoffzellen-Abgas enthaltenen Wassers aufweist.

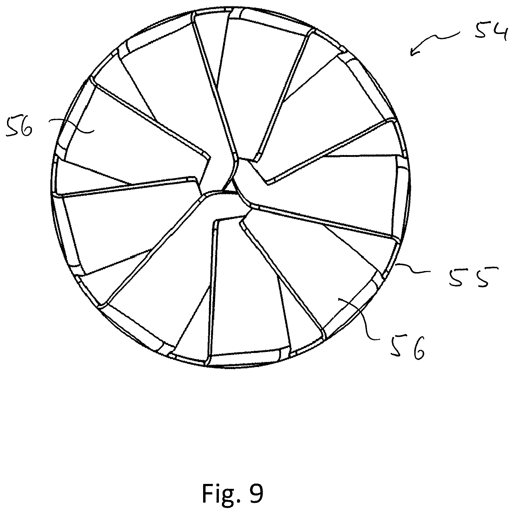

Das Ausmaß der Ablenkung in Umfangsrichtung und damit das Ausmaß der erzeugten Drallströmung, gleichzeitig aber auch das Ausmaß der durch die Strömungsablenkelemente 56 erzeugten Strömungsverdämmung hängt vom Anstellwinkel der Strömungsablenkelemente 56 bezüglich der Abgas-Hauptströmungsrichtung H ab. Bei dem in Fig. 7 und 8 dargestellten Ausgestaltungsbeispiel sind die Strömungsablenkelemente 56 vergleichsweise wenig angewinkelt, also mehr in Richtung der Abgas-Hauptströmungsrichtung H orientiert, so dass eine weniger starke Ablenkung des Brennstoffzellen-Abgasstroms in Umfangsrichtung erzeugt wird. Die Fig. 9 zeigt eine Ausgestaltung der Drallstrom-Erzeugungseinheit 54, bei welcher die in Umfangsrichtung auch weiter ausgedehnten Strömungsablenkelemente 56 bezüglich der Abgas-Hauptströmungsrichtung stärker angestellt sind. Mit dem in Fig. 9 dargestellten Aufbau der Drallstrom-Erzeugungseinheit 54 wird der Brennstoffzellen-Abgasstrom in Umfangsrichtung stärker abgelenkt, was zu einer erhöhten auf im Brennstoffzellen-Abgas enthaltenen Flüssigkeitspartikel einwirkenden Fliehkraft beiträgt.

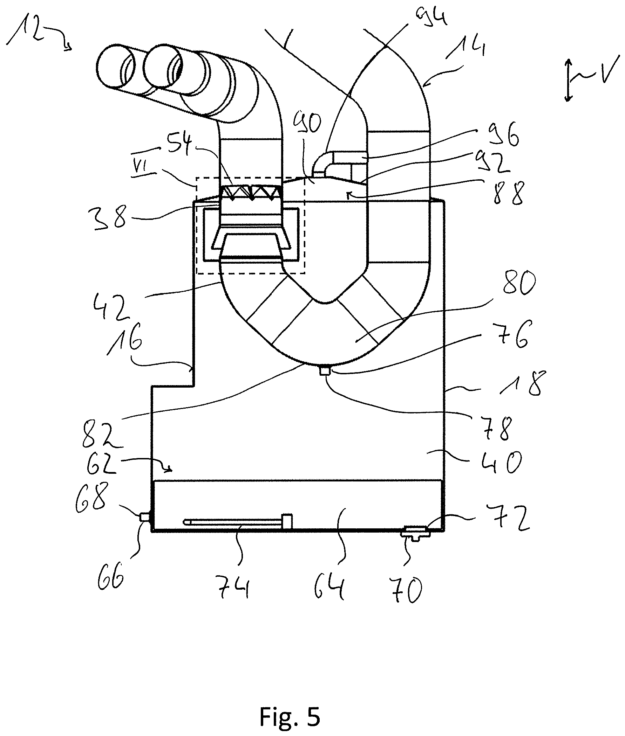

Durch die Umlenkung des Brennstoffzellen-Abgasstroms in Umfangsrichtung und die so erzeugte Drallströmung entstehen Fliehkräfte, welche im Brennstoffzellen-Abgas B transportierte Flüssigkeit bzw. Flüssigkeitströpfchen nach radial außen beaufschlagen. Dies bedeutet, dass stromabwärts der Drallstrom-Erzeugungseinheit 54 im radial äußeren Bereich des Brennstoffzellen-Abgasstroms eine vergleichsweise hohe Konzentration an im Brennstoffzellen-Abgas B transportierter Flüssigkeit entstehen wird. Insbesondere aufgrund des in Fig. 5 erkennbaren Übergangs der beiden Leitungsabschnitte 38, 42 und vor allem auch aufgrund des Umstandes, dass der stromabwärtige Leitungsabschnitt 42 an seinem stromaufwärtigen Ende 58 eine Querschnittsabmessung, also einen Durchmesser bei kreisförmiger Ausgestaltung, aufweist, welche kleiner ist als die Querschnittsabmessung des stromaufwärtigen Leitungsabschnitts 38 in seinen zwischen der Drallstrom-Erzeugungseinheit 54 und dessen stromabwärtigen Ende 60 sich erstreckenden Längenbereich, insbesondere auch in seinem den stromaufwärtigen Endbereich 46 des stromabwärtigen Leitungsabschnitts 42 übergreifenden stromabwärtigen Endbereich 48, tritt der mit Flüssigkeit angereicherte Teil des Brennstoffzellen-Abgasstroms in die erste Flüssigkeitsabgabeöffnung 50 ein, so dass insbesondere auch die in diesem Teil des Brennstoffzellen-Abgasstroms mitgeführte Flüssigkeit in den Innenraum 40 gelangt und somit vom verbleibenden Teil des Brennstoffzellen-Abgasstroms extrahiert wird, welcher entreichert von Flüssigkeit in den stromabwärtigen Leitungsabschnitt 42 eintritt.

In einem in der Vertikalrichtung V unteren Bereich des Abscheideeinheitgehäuses 18 ist ein Flüssigkeitssammelbereich 62 gebildet. Im dargestellten Ausgestaltungsbeispiel ist der Flüssigkeitssammelbereich 62 mit einem nach oben offenen, schalenartigen Sammelbehälter 64 ausgebildet, welcher in den unteren Bereich des Innenraums 40 des Abscheideeinheitgehäuses 18 eingesetzt ist. Im Bereich eines auch das Abscheideeinheitgehäuse 18 durchsetzenden Ableitstutzens 66 ist eine erste Flüssigkeitsableitöffnung 68 gebildet, über welche Flüssigkeit aus dem Abscheideeinheitgehäuse 18 abgegeben werden kann. Dem Ableitstutzen 66 kann beispielsweise ein Ventil zugeordnet sein, um Flüssigkeit zu definierten Zeitpunkten abzugeben und diese beispielsweise in den Brennstoffzellenprozess zurückzuspeisen.

In einem Bodenbereich des Flüssigkeitssammelbehälters 64 bzw. auch des Abscheideeinheitgehäuses 18 kann eine durch ein Abschlusselement 70 abgeschlossene zweite Flüssigkeitsableitöffnung 72 vorgesehen sein, über welche beispielsweise bei Durchführung von Wartungsarbeiten das Abscheideeinheitgehäuse 18 vollständig entleert werden kann.

Ferner kann im Flüssigkeitssammelbereich 62, beispielsweise an einem Bodenbereich des Flüssigkeitssammelbehälters 64 bzw. des Abscheideeinheitgehäuses 18, eine elektrisch erregbare Heizeinheit 74, beispielsweise eine Heizwendel oder dergleichen, vorgesehen sein. Durch diese Heizeinheit 74 kann die in dem Flüssigkeitssammelbereich 62 sich ansammelnde Flüssigkeit erwärmt werden, um deren Einfrieren insbesondere bei vergleichsweise niedrigen Umgebungstemperaturen zu verhindern bzw. um auch bei Frost bzw. niedrigen Umgebungstemperaturen Flüssigkeit aus dem Flüssigkeitssammelbereich 62 abgeben zu können. Es ist darauf hinzuweisen, dass der Flüssigkeitssammelbereich 62 auch ohne den Flüssigkeitssammelbehälter 64 ausgebildet sein könnte und der Ableitstutzen 66 beispielsweise unmittelbar an dem Abscheideeinheitgehäuse 18 ausgebildet sein kann.

Da trotz der Erzeugung einer Drallströmung stromaufwärts des Öffnungsbereichs 44 nicht ausgeschlossen werden kann, dass auch in dem in den stromabwärtigen Leitungsabschnitt 42 eintretenden Teil des Brennstoffzellen-Abgases B noch Flüssigkeit enthalten ist, ist in dem stromabwärtigen Leitungsabschnitt 42 beispielsweise im Bereich eines Ableitstutzens 76 eine zweite Flüssigkeitsabgabeöffnung 78 ausgebildet. Der stromabwärtige Leitungsabschnitt 42 ist in seinem im Innenraum 40 des Abscheideeinheitgehäuses 18 sich erstreckenden Längenbereich mit einem knieartigen Biegungsbereich 80 ausgebildet, welcher einen in der Vertikalrichtung V unten positionierten bzw. zu positionierenden Biegungsscheitel 82 bildet. Im Bereich dieses Biegungsscheitels 82 ist die zweite Flüssigkeitsabgabeöffnung 78 angeordnet, so dass stromabwärts des Öffnungsbereichs 44 sich beispielsweise aufgrund von Kondensation ansammelnde Flüssigkeit am tiefsten Bereich der Brennstoffzellen-Abgasleitung 14 stromabwärts des Öffnungsbereichs 44 ansammeln und in Richtung zum Flüssigkeitssammelbereich 62 aus der Brennstoffzellen-Abgasleitung 14 austreten kann.

Die Notwendigkeit, Flüssigkeit aus dem Brennstoffzellen-Abgas B zu extrahieren, insbesondere um diese auch im Brennstoffzellenbetrieb weiter nutzen zu können, besteht primär dann, wenn als Brennstoffzellen-Abgas B das aus dem Kathodenbereich einer Brennstoffzelle austretende Prozessgas, also das KathodenAbgas K, durch die Brennstoffzellen-Abgasanlage geleitet wird. Am Beginn des Betriebs eines Brennstoffzellensystems kann es erforderlich sein, den Anodenbereich einer Brennstoffzelle mit Gas zu spülen. Dieses im Anodenbereich möglicherweise noch vorhandenen Wasserstoff aus dem Anodenbereich austragende Gas kann als Anoden-Abgas A gleichermaßen in die Brennstoffzellen-Abgasanlage geleitet und über diese nach außen abgegeben werden. Hierfür kann die Brennstoffzellen-Abgasleitung 14 im Eintrittsbereich 12 zwei Eintrittsanschlüsse 84, 86 aufweisen, welche mit dem Kathodenbereich zur Aufnahme des Kathoden-Abgases K bzw. dem Anodenbereich zur Aufnahme des Anoden-Abgases A verbunden sind bzw. über entsprechende Ventilanordnungen verbunden werden können, um gezielt einen oder beide dieser Abgasströme durch die Brennstoffzellen-Abgasanlage 10 leiten zu können. Es ist darauf hinzuweisen, dass mit der Brennstoffzellen-Abgasanlage 10 die Anodenbereiche bzw. die Kathodenbereiche mehrerer Brennstoffzellen bzw. Brennstoffzellenstapel eines Brennstoffzellensystems beispielsweise jeweils über die Eintrittsanschlüsse 84, 86 verbunden sein bzw. werden können.

Wird wasserstoffhaltiges Anoden-Abgas A durch die Brennstoffzellen-Abgasanlage 14 geleitet, so besteht grundsätzlich die Möglichkeit, dass Wasserstoff über die erste Flüssigkeitsabgabeöffnung 50 bzw. die zweite Flüssigkeitsabgabeöffnung 78 in den Innenraum 40 des Abscheideeinheitgehäuses 18 gelangt. Der im Vergleich zu Luft bzw. Sauerstoff und Stickstoff deutlich leichtere Wasserstoff wird sich in dem in der Vertikalrichtung V oberen Bereich des Innenraums 40 im Abscheideeinheitgehäuse 18 ansammeln. Um das Entstehen einer potentiell gefährlichen hohen Wasserstoffkonzentration zu vermeiden, ist daher in diesem in der Vertikalrichtung V oben positionierten Bereich des Abscheideeinheitgehäuses 18 ein Wasserstoffsammelbereich 88 gebildet. In diesem Bereich ist das Abscheideeinheitgehäuse 18 mit einem sich in der Vertikalrichtung V nach oben zu einem oberen Scheitelbereich 90 verjüngenden Wandungsbereich 92 ausgebildet, welcher nach Art eines Trichters den nach oben flüchtigen Wasserstoff zum oberen Scheitelbereich 90 leitet. Im oberen Scheitelbereich 90 schließt ein Ableitrohr 94 an den Wandungsbereich 92 an, welches eine vorzugsweise permanent offene Wasserstoffableitöffnung 96 bereitstellt. In den Innenraum 40 eingeleiteter Wasserstoff wird somit aufgrund seiner Tendenz, sich nach oben zu bewegen, in den Scheitelbereich 90 geleitet und über die Wasserstoffableitöffnung 96 in grundsätzlich unkritischer Konzentration zur Umgebung abgegeben.

Das Bereitstellen des mit der im Wesentlichen permanent offenen Wasserstoffableitöffnung 96 ausgebildeten Wasserstoffsammelbereichs 88 führt weiter dazu, dass grundsätzlich der Innenraum 40 des Abscheideeinheitgehäuses 18 nicht permanent abgeschlossen ist. Dies vermeidet das Entstehen eines Staudrucks bei durch die Brennstoffzellen-Abgasleitung 14 geleitetem Brennstoffzellen-Abgasstrom und ermöglicht somit auch ein im Wesentlichen rückstaufreies Austreten von eine hohe Flüssigkeitskonzentration enthaltendem Brennstoffzellen-Abgas B aus der Brennstoffzellen-Abgasleitung 14 über die erste Flüssigkeitsabgabeöffnung 50. Auch das Vorhandensein der zweiten Flüssigkeitsabgabeöffnung 78 verhindert das Entstehen eines derartigen Staudrucks im Innenraum 40 des Abscheideeinheitgehäuses 18.

Mit einer erfindungsgemäß aufgebauten Brennstoffzellen-Abgasanlage wird die Möglichkeit geschaffen, im Brennstoffzellenabgas mitgeführte Flüssigkeitspartikel, insbesondere Wasserdampf bzw. Wassertröpfchen, effizient und bei geringem Gegendruck bzw. Druckverlust aus dem Brennstoffzellen-Abgas zu extrahieren. Dies ermöglicht einen deutlich effizienteren Betrieb einer Brennstoffzelle, da diese aufgrund des geringeren Gegendrucks bzw. Strömungswiderstands im Bereich der Brennstoffzellen-Abgasanlage beispielsweise mit geringerer Kompressorleistung betrieben werden kann.

Bei der Brennstoffzellen-Abgasanlage können neben der Drallstrom-Erzeugungseinheit auch andere Systembereiche, wie zum Beispiel die Brennstoffzellen-Abgasleitung, die Abscheideeinheit und die Schalldämpfereinheit, beispielsweise im Wesentlichen vollständig mit Kunststoffmaterial aufgebaut sein. Dies trägt zu einem Aufbau einer Brennstoffzellen-Abgasanlage mit geringem Gewicht bei niedrigen Herstellungskosten bei. Der Aufbau mit Kunststoffmaterial führt ferner zu einer sehr guten Korrosionsfestigkeit und einer großen Freiheit in der Formgebung verschiedener Komponenten der Brennstoffzellen-Abgasanlage.

Weiter ist darauf hinzuweisen, dass eine derartige Brennstoffzellen-Abgasanlage auch in Verbindung mit stationär oder beispielsweise in Schiffen oder dergleichen betriebenen Brennstoffzellensystemen Anwendung finden kann.

## Patentansprüche

1. Brennstoffzellen-Abgasanlage für ein Brennstoffzellensystem, insbesondere in einem Fahrzeug, umfassend eine von Brennstoffzellen-Abgas (B) durchströmbare Brennstoffzellen-Abgasleitung (14) und eine von dem Brennstoffzellen-Abgas (B) durchströmbare Abscheideeinheit (16), wobei die Abscheideeinheit (16) umfasst:
- einen von dem Brennstoffzellen-Abgas (B) in einer Abgas-Hauptströmungsrichtung (H) durchströmbaren, stromaufwärtigen Leitungsabschnitt (38) der Brennstoffzellen-Abgasleitung (14),
- einen in einem Öffnungsbereich (44) an den stromaufwärtigen Leitungsabschnitt (38) anschließenden stromabwärtigen Leitungsabschnitt (42) der Brennstoffzellen-Abgasleitung (14),
- eine erste Flüssigkeitsabgabeöffnung (50) in dem Öffnungsbereich (44) zur Abgabe von Flüssigkeit aus dem die Brennstoffzellen-Abgasleitung(14) durchströmenden Brennstoffzellen-Abgas (B),
- eine Drallstrom-Erzeugungseinheit (54) in dem stromaufwärtigen Leitungsabschnitt (38).

2. Brennstoffzellen-Abgasanlage nach Anspruch 1, **dadurch gekennzeichnet, dass** die Drallstrom-Erzeugungseinheit (54) eine Mehrzahl von bezüglich einer Strömungsmittenachse (S) im stromaufwärtigen Leitungsabschnitt (38) in Umfangsrichtung aufeinanderfolgenden, bezüglich der Abgas-Hauptströmungsrichtung (H) im stromaufwärtigen Leitungsabschnitt (38) angestellten Strömungsablenkelementen (56) umfasst.

3. Brennstoffzellen-Abgasanlage nach Anspruch 2, **dadurch gekennzeichnet, dass** die Strömungsablenkelemente (56) sich von einem ringartigen Körper (55) der Drallstrom-Erzeugungseinheit (54) nach radial innen erstrecken, oder/und dass in Umfangsrichtung einander benachbarte die Strömungsablenkelemente (56) sich in ihren radial inneren Bereichen in Umfangsrichtung überlappen.

4. Brennstoffzellen-Abgasanlage nach Anspruch 3, **dadurch gekennzeichnet, dass** die Drallstrom-Erzeugungseinheit (54) mit dem ringartigen Körper (55) und den Strömungsablenkelementen (56) als vorzugsweise einstückiges Blechumformteil ausgebildet ist, oder dass die Drallstrom-Erzeugungseinheit (54) im Wesentlichen vollständig mit Kunststoffmaterial aufgebaut ist.

5. Brennstoffzellen-Abgasanlage nach einem der Ansprüche 1-4, **dadurch gekennzeichnet, dass** im Öffnungsbereich (44) ein stromaufwärtiger Endabschnitt (46) des stromabwärtigen Leitungsabschnitts (42) in einen stromabwärtigen Endabschnitt (48) des stromaufwärtigen Leitungsabschnitts (38) derart eingreifend positioniert ist, dass zwischen dem stromaufwärtigen Endabschnitt (46) des stromabwärtigen Leitungsabschnitts (42) und dem stromabwärtigen Endabschnitt (48) des stromaufwärtigen Leitungsabschnitts (38) die erste Flüssigkeitsabgabeöffnung (50) gebildet ist.

6. Brennstoffzellen-Abgasanlage nach Anspruch 5, **dadurch gekennzeichnet, dass** der stromabwärtige Endabschnitt (48) des stromaufwärtigen Leitungsabschnitts (38) in der Abgas-Hauptströmungsrichtung (H) sich vorzugsweise im Wesentlichen konisch erweiternd ausgebildet ist, oder/und dass der stromaufwärtige Endabschnitt (46) des stromabwärtigen Leitungsabschnitts (42) sich in der Abgas-Hauptströmungsrichtung (H) vorzugsweise im Wesentlichen konisch erweiternd ausgebildet ist.

7. Brennstoffzellen-Abgasanlage nach einem der Ansprüche 1-6, **dadurch gekennzeichnet, dass** der stromabwärtige Leitungsabschnitt (42) an seinem stromaufwärtigen Ende (58) eine kleinere Querschnittsabmessung aufweist, als der stromaufwärtige Leitungsabschnitt (38) in seinem zwischen der Drallstrom-Erzeugungseinheit (54) und seinem stromabwärtigen Ende (60) liegenden Längenbereich, oder/und dass die erste Flüssigkeitsabgabeöffnung (50) im Wesentlichen ringartig ausgebildet ist.

8. Brennstoffzellen-Abgasanlage nach einem der Ansprüche 1-7, **dadurch gekennzeichnet, dass** die Abscheideeinheit (16) ein Abscheideeinheitgehäuse (18) umfasst, wobei der Öffnungsbereich (44) in dem Abscheideeinheitgehäuse (18) angeordnet ist.

9. Brennstoffzellen-Abgasanlage nach einem der Ansprüche 1-8, **dadurch gekennzeichnet, dass** der stromabwärtige Leitungsabschnitt (42) stromabwärts des Öffnungsbereichs (44) eine zweite Flüssigkeitsabgabeöffnung (78) aufweist.

10. Brennstoffzellen-Abgasanlage nach Anspruch 8 und Anspruch 9, **dadurch gekennzeichnet, dass** der stromabwärtige Leitungsabschnitt (42) in dem Abscheideeinheitgehäuse (18) einen Biegungsbereich (80) mit einem in Vertikalrichtung (V) unten zu positionierenden Biegungsscheitel (82) umfasst, wobei die zweite Flüssigkeitsabgabeöffnung (78) im Bereich des Biegungsscheitels (82) angeordnet ist.

11. Brennstoffzellen-Abgasanlage nach Anspruch 8 oder einem der Ansprüche 9 oder 10, sofern auf Anspruch 8 rückbezogen, **dadurch gekennzeichnet, dass** in einem in Vertikalrichtung (V) unten zu positionierenden Bereich des Abscheideeinheitgehäuses (18) ein Flüssigkeitssammelbereich (62) mit wenigstens einer Flüssigkeitsableitöffnung (68, 72) zum Ableiten von Flüssigkeit aus dem Abscheideeinheitgehäuse (18) vorgesehen ist.

12. Brennstoffzellen-Abgasanlage nach Anspruch 11, **dadurch gekennzeichnet, dass** in Zuordnung zu dem Flüssigkeitssammelbereich (62) eine Heizeinheit (74) zum Erwärmen von im Flüssigkeitssammelbereich (62) angesammelter Flüssigkeit vorgesehen ist.

13. Brennstoffzellen-Abgasanlage nach Anspruch 8 oder einem der Ansprüche 9-12, sofern auf Anspruch 8 rückbezogen, **dadurch gekennzeichnet, dass** in einem in Vertikalrichtung (V) oben zu positionierenden Bereich des Abscheideeinheitgehäuses (18) ein Wasserstoffsammelbereich (88) mit wenigstens einer Wasserstoffableitöffnung (96) zum Ableiten von Wasserstoff aus dem Abscheideeinheitgehäuse (18) vorgesehen ist.

14. Brennstoffzellen- Abgasanlage nach Anspruch 13, **dadurch gekennzeichnet, dass** der Wasserstoffsammelbereich (88) einen in Vertikalrichtung (V) nach oben sich verjüngenden Wandungsbereich (92) des Abscheideeinheitgehäuses (18) umfasst, wobei die wenigstens eine Wasserstoffableitöffnung (96) in einem oberen Scheitelbereich (90) des Wandungsbereichs (92) vorgesehen ist.

15. Brennstoffzellen- Abgasanlage nach einem der Ansprüche 1-14, **dadurch gekennzeichnet, dass** vorzugsweise stromabwärts der Abscheideeinheit (16) eine von Brennstoffzellen-Abgas (B) durchströmbare Schalldämpfereinheit (22) vorgesehen ist.
